# EUROPEAN PATENT APPLICATION

(11) **EP 4 481 598 A1**
(43) Date of publication of application: **25.12.2024**
(21) Application number: 22925989.0
(22) Date of filing: 14.02.2022
(51) Int. Cl.: G06F 21/32

(54) **AUTHENTICATION DEVICE, AUTHENTICATION METHOD, AND RECORDING MEDIUM**

(71) Applicant: NEC Corporation, 108-8001 Tokyo (JP)
(72) Inventor: MORISHITA, Yusuke, Tokyo 108-8001 (JP)
(74) Representative: Betten & Resch
(86) International application number: PCT/JP2022/005673
(87) International publication number: WO 2023/152970

(57) **Abstract**

Provided are: an acquisition unit that acquires an image including a predetermined area through which an authentication target person passes; a tracking image that tracks the authentication target person on the basis of a tracking area of the authentication target person including a head of the authentication target person in the image; and a face authentication unit that performs face authentication on the authentication target person, when a face of the authentication target person is included in the image while the tracking unit tracks the authentication target person.

## Description

### Technical Field

This disclosure relates to technical fields of an authentication apparatus, an authentication method, and a recording medium.

### Background Art

Patent Literature 1 describes a technique/technology of: providing a digital image of at least one user detected when passing through a gateless control area; extracting a first face detection dataset from the provided digital image of the detected user; providing, by an electronic reader, a second face detection dataset stored in a wearable device carried by the detected user; and applying face recognition to the first and second face detection datasets in order to determine whether the user associated with the first face detection dataset is identical to the user associated with the second face detection dataset, wherein the detected user is identified as authorized when identical and is identified as unauthorized otherwise. Patent Literature 2 describes a technique/technology including: a server device that acquires a face image of a search target person and acquires a search start range for the search target person; and a camera device including a processing unit that is provided on a vehicle, recognizes a face included in an image, and authenticates whether the recognized face agrees with a face included in the face image, wherein the server device transmits to the camera device a search region face image and instructions for a photographing operation and an authentication operation, and the camera device, when the camera device exists in a search range on the basis of the present position of the camera device, performs the photographing operation according to an instruction for the photographing operation. Patent Literature 3 describes a technique/technology of outputting output information based on first information and second information, wherein the first information is information to identify an identification object in an object space, which includes identification information allocated for a mobile terminal and position information about the position of the mobile terminal, and the second information is information to identify the identification object in the object space, which is information based on a captured image in the object space.

### Citation List

### Patent Literature

Patent Literature 1: JP2020-524928A
Patent Literature 2: JP2021-121050A
Patent Literature 3: JP2018-182705A

### Summary

### Technical Problem

It is an example object of this disclosure to provide an authentication apparatus, an authentication method, and a recording medium that aim to improve the techniques/technologies disclosed in Citation List.

### Solution to Problem

An authentication apparatus according to an example aspect of this disclosure includes: an acquisition unit that acquires an image including a predetermined area through which an authentication target person passes; a tracking unit that tracks the authentication target person on the basis of a tracking area of the authentication target person including a head of the authentication target person in the image; and a face authentication unit that performs face authentication on the authentication target person, when a face of the authentication target person is included in the image while the tracking unit tracks the authentication target person.

An authentication method according to an example aspect of this disclosure includes: acquiring an image including a predetermined area through which an authentication target person passes; tracking the authentication target person on the basis of a tracking area of the authentication target person including a head of the authentication target person in the image; and performing face authentication on the authentication target person, when a face of the authentication target person is included in the image while tracking the authentication target person.

A recording medium according to an example aspect of this disclosure is a recording medium on which a computer program that allows a computer to execute an authentication method is recorded, the authentication method including: acquiring an image including a predetermined area through which an authentication target person passes; tracking the authentication target person on the basis of a tracking area of the authentication target person including a head of the authentication target person in the image; and performing face authentication on the authentication target person, when a face of the authentication target person is included in the image while tracking the authentication target person.

### Brief Description of Drawings

[FIG. 1] FIG. 1 is a block diagram illustrating a configuration of an authentication apparatus in a first example embodiment.
[FIG. 2] FIG. 2 is a block diagram illustrating a configuration of an authentication apparatus in a second example embodiment.
[FIG. 3] FIG. 3 is a conceptual diagram illustrating an example of a scene in which the authentication apparatus in the second example embodiment is applied.
[FIG. 4] FIG. 4 is a conceptual diagram illustrating an example of a determination operation performed by the authentication apparatus in the second example embodiment.
[FIG. 5] FIG. 5 is a flowchart illustrating a flow of an authentication operation performed by the authentication apparatus in the second example embodiment.
[FIG. 6] FIG. 6 is a block diagram illustrating a configuration of an authentication apparatus in a third example embodiment.
[FIG. 7] FIG. 7 is a flowchart illustrating a flow of the authentication operation performed by the authentication apparatus in the third example embodiment.
[FIG. 8] FIG. 8 is a flowchart illustrating a flow of a display control operation performed by the authentication apparatus in the third example embodiment.
[FIG. 9] FIG. 9 illustrates a display example of a display in the third example embodiment.
[FIG. 10] FIG. 10 is a block diagram illustrating a configuration of an authentication apparatus in a fourth example embodiment.
[FIG. 11] FIG. 11 is a flowchart illustrating a flow of a ReID operation performed by the authentication apparatus in the fourth example embodiment.
[FIG. 12] FIG. 12 is a flowchart illustrating a flow of the authentication operation performed by the authentication apparatus in the fourth example embodiment.
[FIG. 13] FIG. 13 is a block diagram illustrating a configuration of an authentication apparatus in a fifth example embodiment.
[FIG. 14] FIG. 14 is a conceptual diagram illustrating an example of a scene in which the authentication apparatus in the fifth example embodiment is applied.
[FIG. 15] FIG. 15 is a conceptual diagram illustrating a first application of an authentication apparatus in a sixth example embodiment.
[FIG. 16] FIG. 16 is a conceptual diagram illustrating a second application of the authentication apparatus in the sixth example embodiment.
[FIG. 17] FIG. 17 is a conceptual diagram illustrating an example of a tracking operation of an authentication apparatus in a seventh example embodiment.

### Description of Example Embodiments

Hereinafter, an authentication apparatus, an authentication method, and a recording medium according to example embodiments will be described with reference to the drawings.

### [1: First Example Embodiment]

An authentication apparatus, an authentication method, and a recording medium according to a first example embodiment will be described. The following describes the authentication apparatus, the authentication method, and the recording medium according to the first example embodiment, by using an authentication apparatus 1 to which the authentication apparatus, the authentication method, and the recording medium according to the first example embodiment are applied.

### [1-1: Configuration of the authentication apparatus 1]

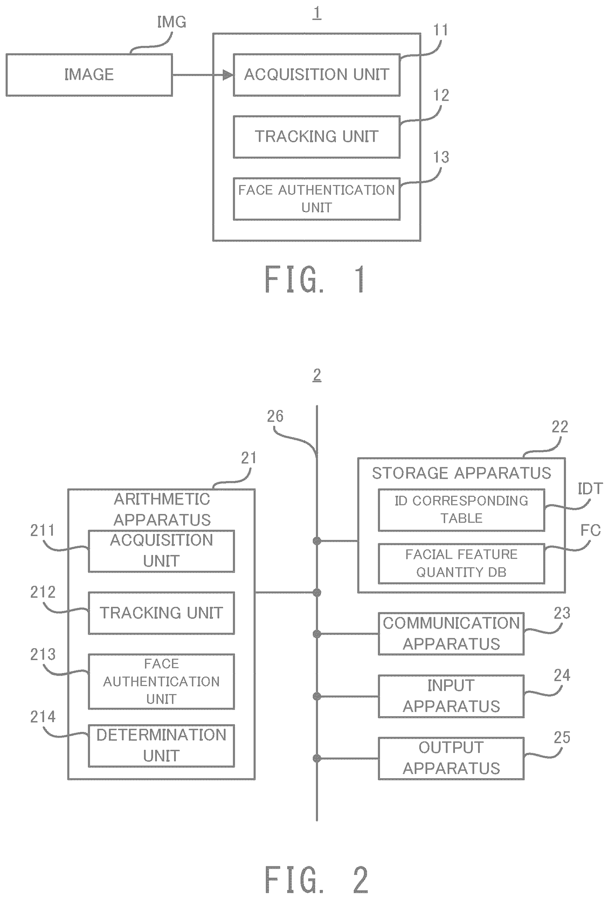

With reference to FIG. 1, a configuration of the authentication apparatus 1 in the first example embodiment will be described. FIG. 1 is a block diagram illustrating the configuration of the authentication apparatus 1 in the first example embodiment.

As illustrated in FIG. 1, the authentication apparatus 1 includes an acquisition unit 11, a tracking unit 12, and a face authentication unit 13. The acquisition unit 11 acquires an image IMG including a predetermined area through which an authentication target person passes. The tracking unit 12 tracks the authentication target person on the basis of a tracking area of the relevant authentication target person including a head of the authentication target person in the image IMG. The face authentication unit 13 performs face authentication on the authentication target person when the face of the authentication target person is included in the image IMG while the tracking unit 12 tracks the authentication target person.

### [1-2: Technical Effect of the authentication apparatus 1]

When the face of the authentication target person is included in the image IMG while the tracking unit 12 tracks the authentication target person, the face authentication is performed on the authentication target person, and it is thus possible to ensure an opportunity of the face authentication on the authentication target person.

### [2: Second Example Embodiment]

An authentication apparatus, an authentication method, and a recording medium according to a second example embodiment will be described. The following describes the authentication apparatus, the authentication method, and the recording medium according to the second example embodiment, by using an authentication apparatus 2 to which the authentication apparatus, the authentication method, and the recording medium according to the second example embodiment are applied.

### [2-1: Configuration of the authentication apparatus 2]

With reference to FIG. 2, a configuration of the authentication apparatus 2 in the second example embodiment will be described. FIG. 2 is a block diagram illustrating the configuration of the authentication apparatus 2 in the second example embodiment.

As illustrated in FIG. 2, the authentication apparatus 2 includes an arithmetic apparatus 21 and a storage apparatus 22. In addition, the authentication apparatus 2 may include a communications apparatus 23, an input apparatus 24, and an output apparatus 25. The authentication apparatus 2, however, may not include at least one of the communication apparatus 23, the input apparatus 24 and the output apparatus 25. The arithmetic apparatus 21, the storage apparatus 22, the communication apparatus 23, the input apparatus 24, and the output apparatus 25 may be connected through a data bus 26.

The arithmetic apparatus 21 includes at least one of a CPU (Central Processing Unit), a GPU (Graphics Processing Unit), and a FPGA (Field Programmable Gate Array), for example. The arithmetic apparatus 21 reads a computer program. For example, the arithmetic apparatus 21 may read a computer program stored in the storage apparatus 22. For example, the arithmetic apparatus 21 may read a computer program stored by a computer-readable and non-transitory recording medium, by using g a not-illustrated recording medium reading apparatus provided in the authentication apparatus 2 (e.g., the input apparatus 24 described later). The arithmetic apparatus 21 may acquire (i.e., download or read) a computer program from a not-illustrated apparatus disposed outside the authentication apparatus 2, through the communication apparatus 23 (or another communication apparatus). The arithmetic apparatus 21 executes the read computer program. Consequently, a logical functional block for performing an operation to be performed by the authentication apparatus 2 is realized or implemented. in the arithmetic apparatus 21. That is, the arithmetic apparatus 21 is allowed to function as a controller for realizing or implementing the logical function block for performing an operation (in other words, processing) to be performed by the authentication apparatus 2.

FIG. 2 illustrates an example of the logical functional block realized or implemented in the arithmetic apparatus 21 to perform an authentication operation. As illustrated in FIG. 2, an acquisition unit 211 that is a specific example of the "acquisition unit", a tracking unit 212 that is a specific example of the "tracking unit", a face authentication unit 213 that is a specific example of the "authentication unit", and a determination unit 214 that is a specific example of the "determination unit" are realized or implemented in the arithmetic apparatus 21. The determination unit 214 determines that the face authentication of the authentication target person is failed when the face authentication of the authentication target person is not successful even once before the authentication target person tracked by the tracking unit 212 goes out of the predetermined area. In the arithmetic apparatus 21, however, the determination unit 214 may not be realized or implemented. Details of operation of each of the acquisition unit 211, the tracking unit 212, the face authentication unit 213, and the determination unit 214 will be described later.

The storage apparatus 22 is configured to store desired data. For example, the storage apparatus 22 may temporarily store a computer program to be executed by the arithmetic apparatus 21. The storage apparatus 22 may temporarily store data that are temporarily used by the arithmetic apparatus 21 when the arithmetic apparatus 21 executes the computer program. The storage apparatus 22 may store data that are stored by the authentication apparatus 2 for a long time. The storage apparatus 22 may include at least one of a RAM (Random Access Memory), a ROM (Read Only Memory), a hard disk apparatus, a magneto-optical disk apparatus, a SSD (Solid State Drive), and a disk array apparatus. That is, the storage apparatus 22 may include a non-transitory recording medium. The storage apparatus 22 may store a facial feature quantity database FC and an ID corresponding table IDT. The facial feature quantity database FC may store an authentication ID serving as an ID of a registered person and a feature quantity of a face image of the registered person (referred to as a "facial feature quantity" in some cases) in association with each other. The ID corresponding table IDT will be described in detail with reference to Table 1. The storage apparatus 22, however, may not store at least one of the facial feature quantity database FC and the ID corresponding table IDT.

The communication apparatus 23 is configured to communicate with an apparatus external to the authentication apparatus 2 through a not-illustrated communication network. The communication apparatus 23 may acquire the image IMG used for the authentication operation from a camera CAM described later through the communication network.

The input apparatus 24 is an apparatus that receives an input of information to the authentication apparatus 2 from an outside of the authentication apparatus 2. For example, the input apparatus 24 may include an operating apparatus (e.g., at least one of a keyboard, a mouse, and a touch panel) that is operable by an operator of the authentication apparatus 2. For example, the input apparatus 24 may include a reading apparatus that is configured to read information recorded as data on a recording medium that is externally attachable to the authentication apparatus 2.

The output apparatus 25 is an apparatus that outputs information to the outside of the authentication apparatus 2. For example, the output apparatus 25 may output information as an image. That is, the output apparatus 25 may include a display apparatus (a so-called display) that is configured to display an image indicating the information that is desirably outputted. For example, the output apparatus 25 may output information as audio/sound. That is, the output apparatus 25 may include an audio apparatus (a so-called speaker) that is configured to output audio/sound. For example, the output apparatus 25 may output information onto a paper surface. That is, the output apparatus 25 may include a print apparatus (a so-called printer) that is configured to print desired information on the paper surface.

### [2-2: Application Example of Authentication Apparatus 2]

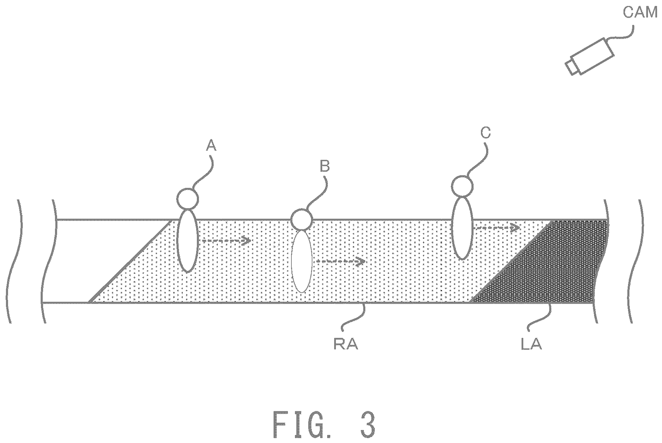

Next, with reference to FIG. 3, an application example of the authentication apparatus 2 in the second example embodiment will be described. FIG. 3 is a conceptual diagram illustrating an example of a scene in which the authentication apparatus 2 in the second example embodiment is applied. The authentication apparatus 2 in the second example embodiment may be applied to the authentication operation of authenticating the authentication target person so as to determine whether or not the authentication target person is permitted to enter a limit area LA provided in a theme park, an airport, a railroad station, an office, an event venue, or the like. For example, a mechanism that is provided with a general flapper gate or a face authentication terminal and that authenticates the authentication target person, may be replaced by the authentication apparatus 2 that authenticates the authentication target person by having the authentication target person pass through an authentication area RA.

In the scene illustrated in FIG. 3, let us assume that there is a passageway with a flow of people from the left to the right towards the limited area LA illustrated on a right side in FIG. 3. A virtual authentication area RA is provided in front of an entrance to the limited area LA. The authentication apparatus 2 authenticates a person in the authentication area RA, as the authenticate target person. The authentication area RA may be, for example, an area of 5 meters by 5 meters. The 5-meter width allows five to six authentication target persons to pass through at the same time. There may be 20 to 30 authentication target persons in the authentication area RA, who may pass through the authentication area RA. In the scene illustrated in FIG. 3, as indicated by arrows, an authentication target person A, an authentication target person B, and an authentication target person C are moving from the authentication area RA toward the limited area LA.

The camera CAM may be disposed around an exit of the authentication area RA. The camera CAM may image a predetermined space to image the authentication target person. The camera CAM may be a high-resolution camera to accurately perform the face authentication in the authentication area RA. For example, the camera CAM may be a camera with 4K resolution. The camera CAM may be disposed at a position or a level that does not interfere with the passage of the authentication target person. The camera CAM may be disposed at a level that is higher than the head of the authentication target person. The camera CAM may be disposed at a level of 2.5 meters, for example. The camera CAM may image an area including the authentication area RA. The authentication area RA may not be an area captured in the image IMG, and may be an area that is somewhat narrower than an angle of view.

It may be not be clarified that the authentication target person is authenticated, such as, for example, the authentication target persons are arranged in line to be authenticated in order. The authentication target person may be authenticated while passing through the authentication area RA. The authentication apparatus 2 may be capable of authenticating the authentication target person even when the person is walking normally, and the authentication target person may be authenticated without stopping and without being aware of being authenticated. The authentication target person may be authenticated while passing through the authentication area RA, even if it is temporarily unable to see the face of the authentication target person by looking back or squatting down. In addition, the authentication apparatus 2 may be capable of authenticate a plurality of authenticate target persons at the same timing. Furthermore, the authentication apparatus 2 may notify a manager/administrator of the authentication apparatus 2 or the like, of authentication results of the plurality of authenticate target persons at the same timing. The manager/administrator of the authentication apparatus 2 or the like may be able to immediately confirm the authentication results of the authenticate target persons. The authentication target person may be able to embody smooth authentication. For example, as compared with a case where a flapper gate or a face authentication terminal is used to turn attention of the authentication target person toward the camera and the authenticate target persons are authenticated one by one, it is possible to improve convenience of the authentication target person.

In addition, for example, in order to improve throughput in walk-through authentication, there is a restriction on an installation location, such as increasing the number of lanes. In contrast, in the authentication in the present example embodiment, there is no restriction on the location for improving the throughput. Furthermore, since the degree of freedom of the authentication apparatus 2 is high, it is suitable even in a situation where a space design is important, such as a theme park.

In order to make the authentication more successful, it is desirable that the authentication target persons stay in the authentication area RA during the same period of time on average. Therefore, for example, an operation rule may be determined such that the authentication target person moves from the back to the front and does not come in from the left and right areas illustrated in the drawing. In addition, an eye catch may be disposed near the camera CAM so as to make it easier to include the face of the authentication target person in the image IMG.

### [2-3: Tracking Operation Performed by Tracking Unit 212]

The tracking unit 212 tracks the authentication target person on the basis of the tracking area of the relevant authentication target person including the head of the authentication target person in the image IMG. The head can be detected even when the authentication target person is facing other than forward, such as backward or sideways. In addition, when the authentication target person overlaps with another authentication target person in the image, the whole body cannot be seen, and thus, stable tracking by detecting the whole body is hard. In contrast, especially when the camera CAM is disposed at a level higher than the head, the head of the authentication target person is less likely to overlap with another authentication target person, and is more easily detected. Therefore, it is possible to perform more stable tracking by the detection of the head. Even when the authentication target person overlaps with another authentication target person, the head is often detected successfully. Therefore, in the second example embodiment, the tracking unit 212 tracks the authentication target person by using the head.

The "tracking area of the relevant authentication target person including the head" may be an area including the head and shoulders of the authentication target person, and may be an area of an upper body of the authentication target person, or an area of an entire body of the authentication target person. In the following, described an example is a case where the "tracking area of the relevant authentication target person including the head" is the "head".

When the image IMG is inputted, the tracking unit 212 may output a position of the head with which a tracking ID is associated, for the number of the authentication target persons in the image IMG. The tracking ID is not the ID that identifies the authentication target person, but may be the ID that associates the same person in different images IMG.

The image IMG may be one frame of a video. The tracking performed by the tracking unit 212 may be an operation of identifying and associating the same authentication target persons between a previous frame and a current frame. The tracking performed by the tracking unit 212 may be performed by determining the head position in the image IMG. Since a movement of the authentication target person is often small and a change in head position is often small between the frames, the tracking unit 212 is capable of perform the association on the basis of a head image and the head position. For example, an optical flow may be used to associate the authentication target persons between the frames. The tracking performed by the tracking unit 212 may be performed by determining an identity of head patterns, or may be performed by determining a degree of similarity of the feature quantities of the head images. In the present example embodiment, the head image may not be used to determine an individual, and may be used to associate the authentication target persons between the frames.

The tracking unit 212 may use, as the previous frame, a frame that is one frame just before the current frame, or may use a frame that is two frames or more before the current frame. The tracking unit 212 may use a plurality of frames previous to the current frame. For example, the tracking unit 212 may track the frame just before and the current frame, by using past five frames of information. The tracking unit 212 may track the current frame by using all the frames of information in the past.

The tracking unit 212 may detect and track the head of the authentication target person who is passing through the authentication area RA. The tracking unit 212 may continue to track the authentication target person who is passing through the authentication area RA and has not succeeded in the face authentication, and the authentication target person whose face cannot be seen. The tracking unit 212 may detect and continue to track the upper body including the head even when the face cannot be detected. The tracking unit 212 may continue to track the authentication target person even when the authentication target person faces backward or is blocked by another person.

### [2-4: Target of Face Authentication Operation Performed by Authentication Apparatus 2]

The face authentication unit 213 may perform the face authentication operation when the face of the authentication target person can be detected and in the following cases (1) to (3).
(1): In a case of the authentication target person with whom a new tracking ID is associated.
   The face authentication unit 213 may perform the face authentication on the authentication target person newly appearing in the image IMG and may identify who this new person is.
(2): In a case of the authentication target person with whom the tracking ID that is not a new tracking ID, but for which the authentication is not yet successful, is associated.

The face authentication unit 213 may perform the face authentication since the authentication target person is not yet identified. A case where the authentication target person is a person who is not registered in the facial feature quantity database FC, corresponds to the case (2) the whole time.

On the other hand, even when corresponding to the case (2), the face authentication may not be performed in all the frames. For example, the face authentication unit 213 may perform the face authentication for each of a predetermined number of frames. The predetermined number may be determined in accordance with a frame rate and a processing speed of the face authentication. Alternatively, the predetermined number may be increased to reduce a processing load of the face authentication.

The face authentication unit 213 may perform the face authentication when the quality of the face image is greater than or equal to predetermined quality. For example, when the authentication target person is facing sideways, the face authentication is considered to be not be successful even if the face authentication is performed many times. In this case, for example, the face authentication unit 213 may perform the face authentication when the face of the authentication target person faces forward.

(3): In a case of the authentication target person who is already authenticated successfully, but a predetermined period elapses from the successful authentication.

The face authentication unit 213 may perform again the face authentication on the authentication target person for whom a certain period elapses from a previous verification time, for a case where the authentication target person is switched due to a tracking error caused by the tracking unit 212 or the like.

For example, suppose that an average passage time of the authentication area RA by the authentication target person is 5 seconds, the determination unit 214 may determine that the authentication target person is likely to be switched when 10 seconds or more elapses from the previous verification time. The elapsed time may be arbitrarily determined depending on a size of the authentication area RA and a type of location to which it is applied. For example, in the case of a theme park, a moving speed of the authentication target person may be slower than that in an airport. Therefore, the elapsed time may be set longer. Alternatively, in the theme park, the authentication target person may tend to face in various directions and it is relatively hard to detect the face. Therefore, the elapsed time may be set longer.

The face authentication section 213 may perform the face authentication in at least one of the following cases: at first sight of the tracking ID; in the case of the tracking ID for which the face authentication is not yet successful; and in the case where the predetermined period elapses from the previous successful face authentication.

### [2-5: ID Corresponding Table IDT]

The determination unit 214 may associate the tracking ID of the authentication target person who is being tracked with the authentication ID registered in advance in the facial feature quantity database FC, and may register them in the ID corresponding table IDT illustrated in Table 1 below.

**[Table1: ID Corresponding Table IDT]**

| Tracking ID | Authentication ID | Previous verification time |
|---|---|---|
| 1 | 0105 | 0:02:30 |
| 2 | 0113 | 0:04:00 |
| 3 | N/A | 0:04:30 |
| 4 | N/A | N/A |

When the face authentication unit 213 is capable of authenticate, by face verification, the authenticate target person to be the registered person, the determination unit 214 may store the tracking ID and the authentication ID of the relevant registered person in association with each other in the ID corresponding table IDT. The registered person is a person whose facial feature quantity is stored in the facial feature quantity database FC.

Furthermore, the determination unit 214 may store a time when the verification is performed, as the "previous verification time", in the ID corresponding table IDT, regardless of whether the authentication is successful or failed. The determination unit 214 may determine that the tracking is likely to be failed, when the predetermined period or longer time elapses from the previous verification time. That is, even if the authentication is already successful, i.e., even if the authentication ID is registered, when the predetermined period or longer time elapses from the previous verification time, the face authentication unit 213 may perform the authentication operation. Furthermore, the determination unit 214 is allowed to determine that face detection is successful with reference to the previous verification time, even if the authentication is not yet successful, i.e., even if the authentication ID is not yet registered.

### [2-6: Determination Operation by Determination Unit 214]

When the authentication is successful at any timing while the authentication target person is tracked, the determination unit 214 may determine that the face authentication of the authentication target person is successful. When the authentication is successful in the predetermined period, the determination unit 214 may determine that the face authentication of the authentication target person is successful. For example, the determination unit 214 may determine that the face authentication of the authentication target person is successful in a case where the authentication is successful within 8 seconds from the start of tracking of the authentication target person.

When the authentication is successful while the authentication target person stays in the predetermined space, the determination unit 214 may determine that the face authentication of the authentication target person is successful. The determination unit 214 determine that the face authentication of the authentication target person is successful when the face is seen even once in the authentication area RA and the face authentication is successful. By referring to the ID corresponding table IDT, the determination unit 214 may grasp whether the face authentication of the relevant authentication target person is successful even once in the authentication area RA, when the authentication target person exits from the authentication area RA.

Even if the face area is hidden, such as a case where the authentication target person who is passing through the authentication area RA, faces backward or is blocked by another authentication target person in front or the like, when the face is detected other than in the above case and the authentication is successful, then, the determination unit 214 may determine that authentication is successful

On the other hand, the face authentication of the authentication target person who passes through while hiding the face the whole time cannot be performed because the face is not seen. When the face is not seen and the face authentication cannot be performed, the determination unit 214 may determine that the authentication is failed.

The determination unit 214 may determine that the authentication is failed when the face authentication is not successful even once while the authentication target person passes through the authentication area RA.

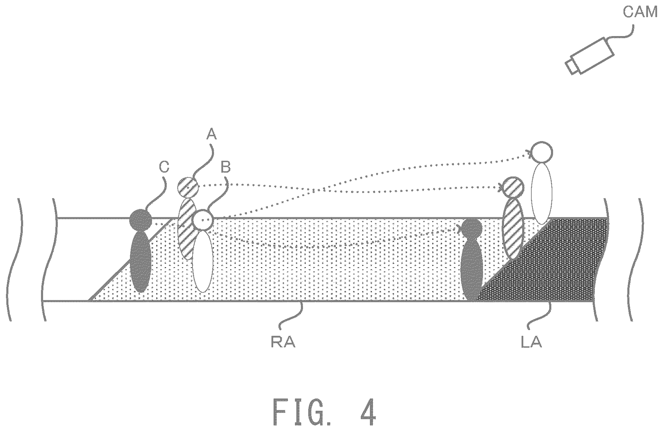

FIG. 4 is a conceptual diagram illustrating an example of the authentication operation performed by the authentication apparatus 2 in the second example embodiment. Let us assume that the authentication target person Ais tracked the whole time while moving in the authentication area RA, but the face is not detected. In other words, it is assumed that the face authentication operation cannot be performed. In this instance, the determination unit 214 may determine that the authentication of the authentication target person A is failed when the authentication target person A goes out of the authentication area RA. For example, the authentication target person A faces forward near the entrance of the authentication area RA, but is hidden by others and the face cannot be seen, and faces sideways even near the exit of the authentication area RA and the face cannot be seen. In this instance, since the face verification of the authentication target person A cannot be performed, the determination unit 214 determines that authentication target person A has failed in the authentication.

Let us assume that the face cannot be detected when the authentication target person B goes out of the authentication area RA, but the face authentication is successful while the authentication target person B moves in the authentication area RA. In this instance, the determination unit 214 may determine that the authentication of the authentication target person B is successful when the authentication target person B goes out of the authentication area RA. For example, the authentication target person B looks down at the exit of the authentication area RA and the face cannot be detected, but the face can be detected while the authentication target person B stays in the authentication area RA, and the face authentication by the face authentication unit 213 is successful, followed by tracking by the tracking unit 212, and therefore, the determination unit 214 may determine that the authentication of the authentication target person B is successful.

The authentication target person C is tracked the whole time while moving in the authentication area RA, but, for example, is facing sideways or is hidden by the authentication target person B, and the face cannot be detected. In addition, the face verification is failed when the authentication target person C goes out of the authentication area RA. In this instance, the determination unit 214 may determine that the authentication of the authentication target person C is failed when the authentication target person C goes out of the authentication area RA. For example, the authentication target person C faces sideways near the entrance of the authentication area RA and the face cannot be detected, but the face can be detected at the exit of the authentication area RA and the face authentication is performed; however, but the authentication target person C does not match any of the registered persons. In this instance, the determination unit 214 may determine that the authentication of the authentication target person C is failed.

### [2-7: Authentication Operation for Each Image IMG]

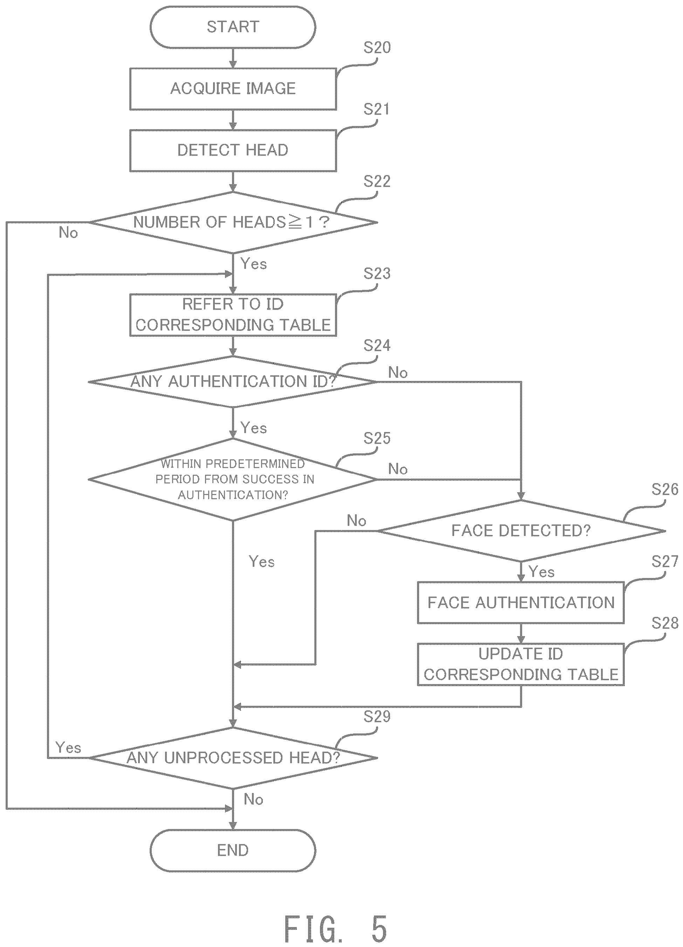

With reference to FIG. 5, a flow of the authentication operation performed by the authentication apparatus 2 in the second example embodiment will be described. FIG. 5 is a flowchart illustrating the flow of the authentication operation performed by the authentication apparatus 2 in the second example embodiment. The operation from "start" to "end" illustrated in FIG. 5 may be an operation for each image IMG.

As illustrated in FIG. 5, the acquisition unit 211 acquires the image IMG including the predetermined area through which the authentication target person passes (step S20). The acquisition unit 211 may acquire the image IMG including the predetermined area through which the authentication target person passes, at each predetermined time. The acquisition unit 211 may acquire one frame of a video from the camera CAM. The acquisition unit 211 may acquire 30 frames from the camera CAM for 1 second.

The tracking unit 212 tracks the authentication target person on the basis of the head of the authentication target person in the image IMG (step S21). The tracking unit 212 may detect the head from the acquired image IMG and identifies the tracking ID.

The tracking unit 212 determines whether or not the number of the heads is greater than or equal to 1 (step S22). When the number of the heads is greater than or equal to 1 (the step S22: Yes), the determination unit 214 refers to a column of the relevant tracking ID of the ID corresponding table IDT (step S23). The determination unit 214 determines whether or not the authentication ID is included in the column of the relevant tracking ID of the ID corresponding table IDT (step S24). When the authentication ID is included in the column of the relevant tracking ID (the step S24: Yes), the determination unit 214 determines whether or not it is within the predetermined period from the successful authentication of the relevant authentication target person (step S25). The determination unit 214 may determine whether or not the elapsed time from the previous verification time included in the ID corresponding table IDT is within the predetermined period. When it is within the predetermined period from the successful authentication of the authentication target person (the step S25: Yes), the operation proceeds to a step S29.

When the authentication ID is not included in the column of the relevant tracking ID (the step S24: No) and when it is beyond the predetermined period from the successful authentication of the authentication target person (the step S25: No), the face authentication unit 213 determines whether or not the face of the relevant authentication target person can be detected (step S26). When the face of the relevant authentication target person can be detected (the step S26: Yes), the face authentication unit 213 performs the face verification (step S27). The face authentication part 213 may extract the feature quantity of the detected face image, may collate/verify with the feature quantity registered in the facial feature quantity database FC, and may identify the authentication target person.

When the determination unit 214 determines that the face authentication of the authentication target person tracked by the tracking unit 212 has been successful before, the face authentication unit 213 does not need to perform the face authentication even when the image IMG includes the face of the authentication target person. On the other hand, even when the determination unit 214 determines that the face authentication of the authentication target person tracked by the tracking unit 212 has been successful before, when the predetermined period elapses from the previous successful face authentication, the face authentication unit 213 may perform the face authentication. The face authentication unit 213 may perform the face authentication on the authentication target person when the face of the authentication target person is included in the image IMG while the tracking unit 212 tracks the authentication target person. When the face of the relevant authentication target person cannot be detected (the step S26: No), the operation proceeds to a step S29.

The determination unit 214 updates the ID corresponding table IDT on the basis of a result of the face authentication (step S28).

The tracking unit 212 determines whether there is an unprocessed head (step S29). When there is an unprocessed head (the step S29: Yes), the operation proceeds to the step S24. When there is no unprocessed head (the step S29: No), the operation is ended.

A threshold of the authentication of the authentication target person located at a back area of the authentication area RA, may be set different from a threshold of the authentication of the authentication target person located in a front area. For example, the face image of the authentication target person in the back area, may have lower resolution than that of the front area. Therefore, the threshold of the authentication of the authentication target person located in the back area, may be set lower than the threshold of the authentication of the authentication target person located in the front area. Alternatively, the authentication target person located in the back area may have more opportunities to be authenticated, than that of the authentication target person located in the front area. Therefore, the threshold of the authentication of the authentication target person located in the back area, may be set higher than the threshold of the authentication of the authentication target person located in the front area.

### [2-8: Technical Effect of Authentication Apparatus 2]

When the face authentication of the tracked authentication target person is not successful even once before the authentication target person goes out of the predetermined area, the face authentication of the authentication target person is determined to be failed. Therefore, the face authentication of the authentication target person is judged to have failed. Therefore, it is possible to properly determine that a person who has not succeeded in the face authentication is a person who has failed in the face authentication, while ensuring the opportunity of the face authentication of the authentication target person.

### [3: Third Example Embodiment]

An authentication apparatus, an authentication method, and a recording medium according to a third example embodiment will be described. The following describes the authentication apparatus, the authentication method, and the recording medium according to the third example embodiment, by using an authentication apparatus 3 to which the authentication apparatus, the authentication method, and the recording medium according to the third example embodiment are applied.

### [3-1: Configuration of Authentication Apparatus 3]

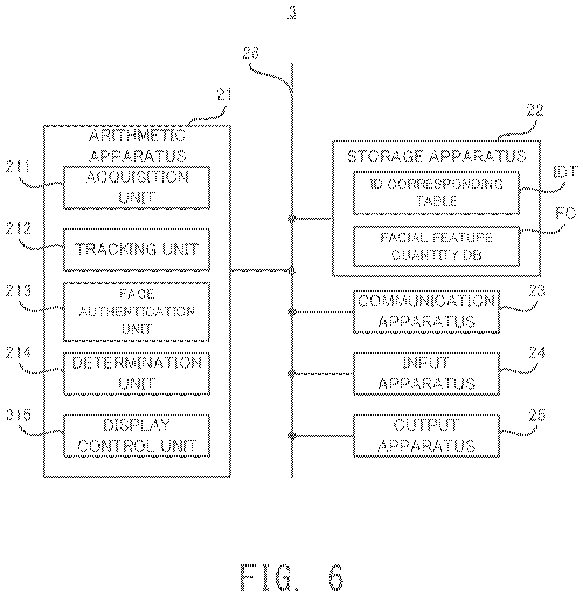

With reference to FIG. 6, a configuration of the authentication apparatus 3 in the third example embodiment will be described. FIG. 6 is a block diagram illustrating the configuration of the authentication apparatus 3 in the third example embodiment.

As illustrated in FIG. 6, the authentication apparatus 3 in the third example embodiment is different from the authentication apparatus 2 in the second example embodiment, in that the arithmetic apparatus 21 includes a display control unit 315. The other features of the authentication apparatus 3 may be the same as those of the authentication apparatus 2.

### [3-2: Display Operation Performed by Authentication Apparatus 3]

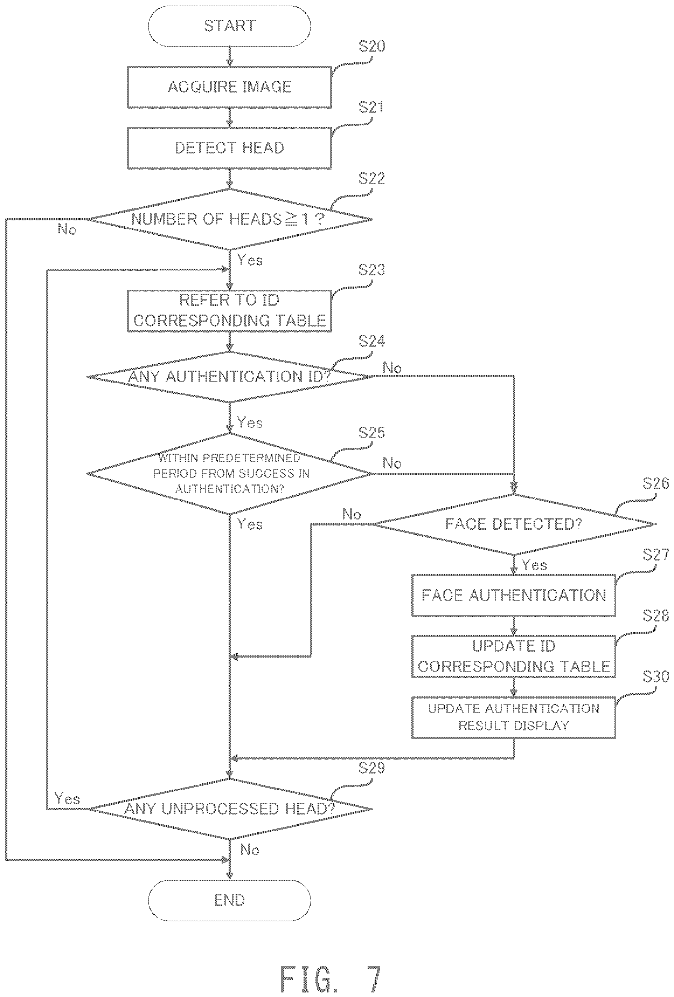

With reference to FIG. 7 to FIG. 9, a flow of an authentication result display operation performed by the authentication apparatus 3 in the third example embodiment will be described. FIG. 7 is a flowchart illustrating the flow of the authentication operation performed by the authentication apparatus 3 in the third example embodiment. The operation from "start" to "end" illustrated in FIG. 7 may be an operation for each image IMG.

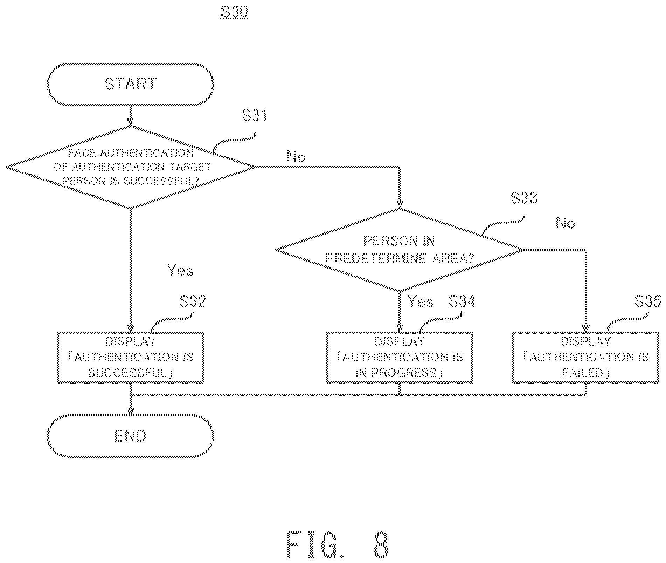

As illustrated in FIG. 7, the authentication operation performed by the authentication apparatus 3 in the third example embodiment is different from the authentication operation performed by the authentication apparatus 2 in the second example embodiment, in that the authentication result display operation (step S30) is performed after the update operation of the ID corresponding table IDT (step S28). FIG. 8 is a flowchart illustrating the flow of the authentication result display operation (step S30 illustrated in FIG. 7) performed by the authentication apparatus 3 in the third example embodiment. That is, the authentication apparatus 3 in the third example embodiment may update the authentication result display at each time when one image IMG is processed.

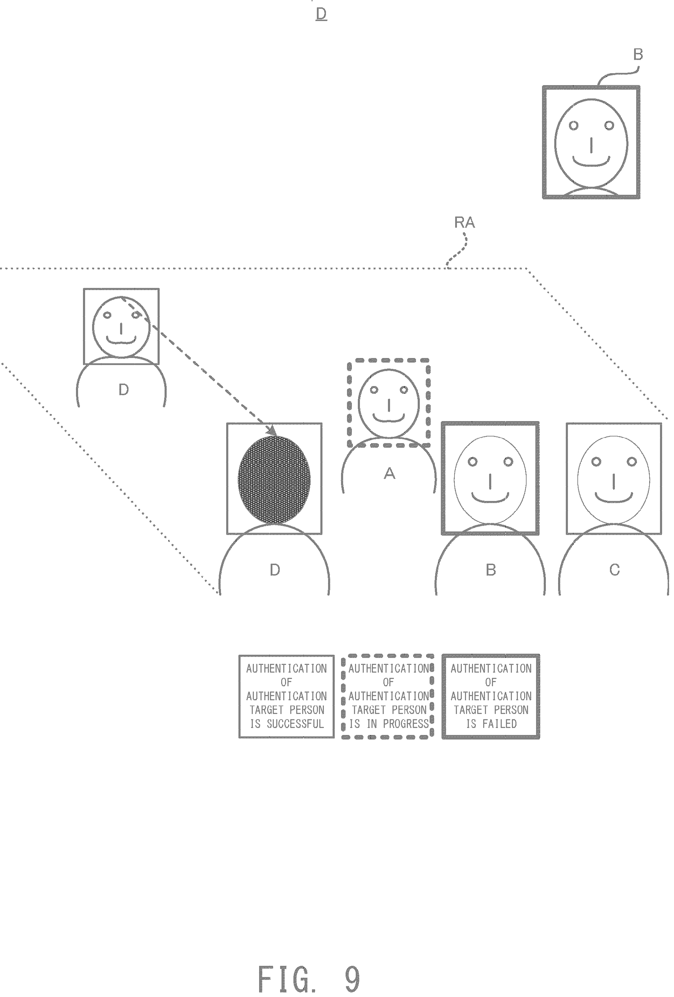

In the third example embodiment, the output apparatus 25 may include a display apparatus (referred to as a "display D") that is configured to display an image indicating information that is desirably outputted. FIG. 9 illustrates a screen example of the authentication result displayed on the display D in the third example embodiment. The display D in the third example embodiment may display a screen for confirmation by a security guard who monitors the authentication area RA and a security guard who monitors at a control center of entrance/exit management. The display control unit 315 may control the indication of the display D.

As illustrated in FIG. 8, the determination unit 214 determines whether or not the face authentication of the authentication target person is successful (step S31). When the face authentication of the authentication target person is successful (the step S31: Yes), the display control unit 315 superimposes information indicating the success in the face authentication of the relevant authentication target person, on the face of the relevant authentication target person included in the image IMG, and displays the image (step S32). In the screen example illustrated in FIG. 9, the information indicating the success in the face authentication of the relevant authentication target person, is displayed as a rectangular solid line. When the face authentication of the authentication target person C is successful, the display control unit 315 may superimpose the rectangular solid line on the face of the authentication target person C included in the image IMG, and may display the image.

In addition, the determination unit 214 may allow the authentication target person who has failed in the face detection before. For example, an authentication target person D succeeds in the face authentication soon after entering the authentication area RA, but faces backward near the exit of the authentication area RA and the face is not detected, and the face authentication cannot be performed. In this instance, the determination unit 214 may determine that the face authentication of the authentication target person D is successful. The display control unit 315 may superimpose the rectangular solid line on the face of the authentication target person D and may display the image, while the authentication target person D is in the authentication area RA, from the timing when the face authentication of the person D is successful.

The determination unit 214 determines whether or not the authentication target person is in the predetermined area (step S33). When the authentication target person is in the predetermined area, i.e., when the face authentication of the relevant authentication target person is not yet successful before the tracked authentication target person goes out of the predetermined area (the step S33: Yes), the display control unit 315 superimposes information indicating that the relevant authentication target person is subjected to the face authentication, on the face of the relevant authentication target person included in the image IMG, and displays the image (step S34). In the screen example illustrated in FIG. 9, the information indicating that the relevant authentication target person is subjected to the face authentication, is displayed as a rectangular dashed line. When the authentication target person A is being authenticated, the display control unit 315 may superimpose the rectangular dashed line on the face of the authentication target person A included in the image IMG and may display the image.

The determination in the step S33 may be determination by the determination unit 214 regarding whether or not it is less than the predetermined period after the authentication target person appears in the predetermined area. Alternatively, the determination in the step S33 may be determination by the determination unit 214 regarding whether or not a length of time in which the tracking unit 212 tracks the authentication target person is less than the predetermined period. The determination unit 214 may determine whether the authentication is successful or failed while the authentication target person is in a predetermined time and space.

When the authentication target person is not in the predetermined area, i.e., when the tracked authentication target person goes out of the predetermined area, but the face authentication of the authentication target person is not successful even once (the step S33: No), the determination unit 214 determines that the face authentication of the authentication target person is failed. In this case, the display control unit 315 superimposes information indicating the failure in the face authentication of the relevant authentication target person, on the face of the relevant authentication target person included in the image IMG and displays the image (step S35).

In the screen example illustrated in FIG. 9, the information indicating the failure in the face authentication of the relevant authentication target person, is displayed as a rectangular thick solid line. When the face authentication of the authentication target person B is failed, the display control unit 315 may superimpose the rectangular thick solid line on the face of the authentication target person B included in the image IMG and may display the image. In the screen example illustrated in FIG. 9, when the face authentication of the authentication target person B is failed, the display control unit 315 may emphasize and display a face image B of the authentication target person B at a corner of the screen.

The determination unit 214 may determine that the authentication is failed only for the authentication target person who does not succeed in the face authentication even once while passing through the authentication area RA. That is, the display control unit 315 may superimpose the rectangular dashed line on the face of the relevant authentication target person, and may display the image while the authentication target person who is determined to fail is in the authentication area RA, and may superimpose the rectangular thick solid line on the face of the relevant authentication target person when the relevant authentication target person arrives at the exit of the authentication area RA. That is, when the authentication target person A arrives at the exit of the authentication area RA without succeeding in the face authentication even once, the display control unit 315 may superimpose rectangular thick solid line on the face of the authentication target person A included in the image IMG and may display the image.

The display control unit 315 may perform display differently when the face authentication is not successful because the face of the authentication target person included in the image IMG is unsuitable for the face authentication, and when the face authentication is not successful even though the face of the authentication target person included in the image IMG is suitable for the face authentication. That is, after the step S33: No, a step in which the determination unit 214 determines whether or not the face authentication is performed while the relevant authentication target person is being tracked, and a step of different display by the display control unit 315 may be performed. For example, the determination unit 214 may refer to the ID corresponding table IDT and may determine whether or not the face authentication is performed while the relevant authentication target person is being tracked, in accordance with whether or not the previous verification time is registered.

The case where the face authentication is not successful because the face of the authentication target person included in the image IMG is unsuitable for the face authentication, includes a case where the face of the authentication target person faces backward, downward, sideways or the like the whole time and the face suitable for the authentication is not detected, a case where the authentication target person looks different than usual, such as having a beard and wearing glasses, a case where there is a problem with camera CAM and a quality failure in the image such as blurring or shielding, or similar cases. The case where the face authentication is not successful even though the face of the authentication target person included in the image IMG is suitable for the face authentication, may be a case where the authentication target person is determined to be an unregistered person. Specifically, it may be a case where a degree of similarity between the feature quantity of the face image of the authentication target person and the feature quantity of the face image of any registered person may not exceed a threshold.

While a plurality of authentication target persons pass through the authentication area RA, the determination unit 214 may perform real-time personal authentication on all the authentication target persons passing through, and may identify even the authentication target person whose face cannot be detected and the authentication target person who is not registered. Then, the display control unit 315 may notify the authentication target person through the indication of the display D before the relevant authentication target person leaves from near the exit of the authentication area RA.

### [3-3: Technical Effect of Authentication Apparatus 3]

The manager/administrator is able to confirm a state of the face authentication of each authentication target person in real time by visually recognizing the display D. For example, the authentication target person who is near the exit of the authentication area RA, and yet for whom the image indicating "authentication in progress" is superimposed, is likely to be the authentication target person who "fails in the authentication", and the manager/administrator may be able to pay attention to the authentication target person. In addition, by the display control unit 315 allowing different display for each cause of the "authentication failure", the manager/administrator is able to know the cause of the failure in the face authentication.

### [4: Fourth Example Embodiment]

An authentication apparatus, an authentication method, and a recording medium according to a fourth example embodiment will be described. The following describes the authentication apparatus, the authentication method, and the recording medium according to the fourth example embodiment, by using an authentication apparatus 4 to which the authentication apparatus, the authentication method, and the recording medium according to the fourth example embodiment are applied.

### [4-1: Configuration of Authentication Apparatus 4]

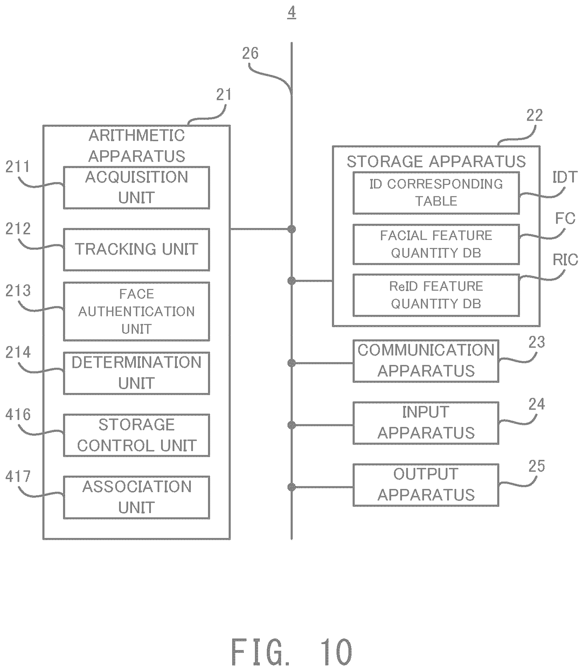

With reference to FIG. 10, a configuration of the authentication apparatus 4 in the fourth example embodiment will be described. FIG. 10 is a block diagram illustrating the configuration of the authentication apparatus 4 in the fourth example embodiment.

As illustrated in FIG. 10, the authentication apparatus 4 in the fourth example embodiment is different from the authentication apparatus 2 in the second example embodiment and the authentication apparatus 3 in the third example embodiment, in that the arithmetic apparatus 21 includes a storage control unit 416 and an association unit 417, and in that the storage apparatus 22 stores a ReID feature quantity database RIC. Other features of the authentication apparatus 4 may be the same as those of the authentication apparatus 2 and the authentication apparatus 3. The ReID feature quantity database RIC, however, may not be stored in the storage apparatus 22.

### [4-2: ReID Operation]

A ReID operation may be an operation that links and manages the tracking ID of the authentication target person tracked in different cases. The different cases may be different timings, different locations, or cases of using images IMG acquired from different cameras CAM.

The tracking unit 212 may hardly perform the tracking when the head cannot be detected for a predetermined time, for example, for a second. That is, in a case where 30 frames are imaged for a second, it is a case where the tracking unit 212 cannot detect the head over 30 frames. The ReID operation may be processing performed when the operation of tracking the authentication target person is interrupted, or when a new authentication target person appears, or the like. The ReID operation may be a corresponding operation when a tracking error occurs and a different tracking ID is given to the same person. The ReID operation may be an operation proficient in the identification of the same person.

The ReID feature quantity database RIC may store the tracking ID of the relevant authentication target person and a ReID feature quantity of the relevant authentication target person in association with each other. The ReID feature quantity may be a feature quantity for identifying the authentication target person. The ReID feature quantity may be a feature quantity extracted from an image of a rectangular area including the authentication target person. The ReID feature quantity may be a feature quantity extracted from a whole body image of the relevant authentication target person. The ReID feature quantity may be a feature quantity extracted from an upper body image of the authentication target person. The upper body image of the authentication target person may include at least clothes worn by the authentication target person. That is, in the ReID operation, it may be determined whether the authentication target person is the same person, from the fact that the wearing clothes are the same. The ReID feature quantity may be a feature quantity extracted from a head image of the authentication target person.

The storage control unit 416 stores information about the tracked authentication target person, i.e., the authentication target person who has been tracked by the tracking unit 212, in the ReID feature quantity database RIC. When the head of a non-tracked authentication target person, i.e., the authentication target person newly tracked by the tracking unit 212, is included in the image IMG, and when the information about the tracked authentication target person who is the same person as the non-tracked authentication target person is stored in the ReID feature quantity database RIC, the association unit 417 associates the non-tracked authentication target person with the relevant tracked authentication target person.

A verification operation based on the ReID feature quantity may be able to determine whether or not the authentication target person is the same person, more accurately than the tracking operation performed by the tracking unit 212. In addition, the verification operation based on the ReID feature quantity may have a lighter operation load than that of the verification operation between the facial feature quantities. That is, the ReID operation is able to determine whether or not the authentication target person is the same person, more accurately than the tracking operation performed by the tracking unit 212, and may have a smaller operation load than that of the verification operation between the facial feature quantities. In the fourth example embodiment, even if the tracking by the tracking unit 212 is failed, the tracking may be continued without performing the face authentication.

### [4-3: Target of ReID Operation]

The tracking ID of the tracked authentication target person who has been tracked, will be referred to as a "corresponding tracking ID". The association unit 417 may perform the ReID operations on the authentication target person whose tracking ID is not associated with the corresponding tracking ID and for whom the face authentication is not successful. The association unit 417 may perform the ReID operations when a ReID feature quantity extraction area RICA of the relevant authentication target person is included in the image IMG. The ReID feature quantity extraction area RICA of the relevant authentication target person, may be a body area of the relevant authentication target person, an upper body area of the relevant authentication target person, or an area including a part of the clothes worn by the relevant authentication target person.

When the tracking unit 212 cannot perform the tracking even though the head of the relevant authentication target person is included in the image IMG, and when the ReID feature quantity extraction area RICA of the relevant authentication target person is included in the image IMG, the association unit 417 may determine that the authentication target person is the same person, from body features included in the ReID feature quantity extraction area RICA of the relevant authentication target person.

The ReID operation may not be performed when there is no doubt that the person is the same. When there is no doubt that the person is the same, only the operation of tracking the head may be performed.

### [4-4: ID Corresponding Table IDT]

For example, the ID corresponding table IDT in the fourth example embodiment may be configured as illustrated in [Table 2] below.

**[Table 2: ID Corresponding Table IDT]**

| Tracking ID | Corresponding tracking ID | Authentication ID | Previous verification time | Tracking start time |
|---|---|---|---|---|
| 1 | N/A | 0105 | 0:02:30 | 0:02:00 |
| 2 | N/A | 0113 | 0:04:00 | 0:03:30 |
| 3 | N/A | N/A | 0:04:30 | 0:04:00 |
| 4 | N/A | N/A | N/A | 0:04:10 |
| 5 | N/A | N/A | N/A | 0:04:20 |
| 6 | 1 | (0105) | (0:02:30) | 0:05:00 |

That is, as compared with the ID corresponding table IDT in the second example embodiment, the ID corresponding table IDT in the fourth example embodiment may further include a column of the corresponding tracking ID and a column of a tracking start time.

### [4-5: ReID Operation for Each Image IMG]

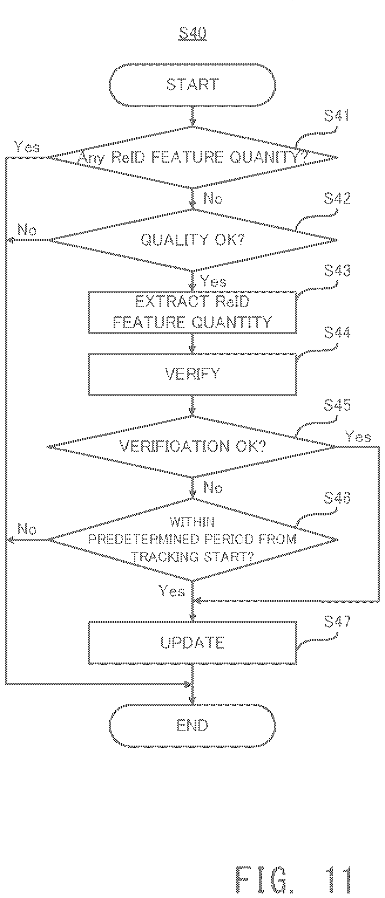

With reference to FIG. 11, a flow of the ReID operation performed by the authentication apparatus 4 in the fourth example embodiment will be described. FIG. 11 is a flowchart illustrating the flow of the ReID operation performed by the authentication apparatus 4 in the fourth example embodiment.

As illustrated in FIG. 11, the determination unit 214 determines whether or not the information about the relevant authentication target person is stored in the ReID feature quantity database RIC (step S41). The determination unit 214 may determine at least one of whether or not the ReID feature quantity of the relevant authentication target person is stored in the ReID feature quantity database RIC, and whether or not the tracking ID of the relevant authentication target person is associated with the corresponding tracking ID in the ID corresponding table IDT.

That is, in the step S41, a case where the ReID feature quantity of the relevant authentication target person is not stored in the ReID feature quantity database RIC, may be a case where the relevant authentication target person is the non-tracked authentication target person newly tracked by the tracking section 212. The tracking unit 212 may determine that the authentication target person is the non-tracked authentication target person newly tracked, when the head of the authentication target person newly tracked is included in the image IMG.

When the ReID feature quantity of the relevant authentication target person is not stored in the ReID feature quantity database RIC (the step S41: No), the storage control unit 416 determines whether or not the quality of the ReID feature quantity extraction area RICA of the relevant authentication target person in the image IMG is greater than or equal to predetermined quality (step S42). A case where the quality of the ReID feature quantity extraction area RICA in the image IMG is greater than or equal to predetermined quality, may be a case where it is a quality that allows the extraction of the ReID feature quantity from the ReID feature quantity extraction area RICA in the image IMG. When the quality of the ReID feature quantity extraction area RICA in the image IMG is greater than or equal to predetermined quality (the step S42: Yes), the storage control unit 416 extracts the ReID feature quantity from the ReID feature quantity extraction area RICA in the image IMG (step S43).

The association unit 417 collates/verifies the ReID feature quantity of the relevant authentication target person with the ReID feature quantity of the tracked authentication target person already stored in the ReID feature quantity database RIC (step S44). The association unit 417 determines whether or not the verification of the ReID feature quantity of the relevant authentication target person and the ReID feature quantity of the tracked authentication target person already stored in the ReID feature quantity database RIC is successful (step S45). When the verification is successful (the step S45: Yes), i.e., when the ReID feature quantity of the tracked authentication target person who is the same person as the relevant authentication target person, is stored in the ReID feature quantity database RIC, the association unit 417 associates the relevant authentication target person with the relevant tracked authentication target person (step S47). For example, in the example illustrated in Table 2, the tracking ID of the relevant authentication target person is "6", and is determined to be the same person as the authentication target person with a tracking ID of"1." In this instance, the association unit 417 may add "1" to the column of the corresponding tracking ID of the authentication target person with a tracking ID of "6", and may add an authentication ID of "0105", which is the same as that of the authentication target person with a tracking ID of "1", to a column of the authentication ID, and may add the previous verification time "0:02:30". When the verification is successful (the step S45: Yes), the storage control unit 416 may store the ReID feature quantity of the relevant authentication target person in the ReID feature quantity database RIC.

When the verification is failed (the step S45: No), the determination unit 214 determines whether the predetermined period elapses from the start of the tracking of the relevant authentication target person (step S46). The determination unit 214 may determine whether the predetermined period elapses, with reference to the tracking start time of the relevant authentication target person in the ID corresponding table IDT.

When the predetermined period elapses (the step S46: Yes), the operation proceeds to a step S47. For example, in the example illustrated in Table 2, let us assume that it is determined by the determination section 214 that the predetermined period elapses for the authentication target person with a tracking ID of "5". In this instance, the determination unit 214 may add "N/A" to the column of the corresponding tracking ID of the authentication target person with a tracking ID of "5". In addition, when the predetermined period elapses (the step S46: Yes), the storage control unit 416 may store the ReID feature quantity of the relevant authentication target person in the ReID feature quantity database RIC.

In the step S41, when the ReID feature quantity of the relevant authentication target person is stored in the ReID feature quantity database RIC, the ReID operation is ended. In the step S41, the case where the ReID feature quantity of the relevant authentication target person is stored in the ReID feature quantity database RIC, may be a case where the verification of the ReID feature quantity of the relevant authentication target person and the ReID feature quantity of the tracked authentication target person already stored in the ReID feature quantity database RIC is already performed by the association unit 417. Alternatively, it is a case where even though the predetermined period elapses from the start of the tracking of the relevant authentication target person, the verification by the association unit 417 is not successful between the ReID feature quantity of the relevant authentication target person and the ReID feature quantity of the tracked authentication target person already stored in the ReID feature quantity database RIC.

Furthermore, in the step S42, when the quality of the ReID feature quantity extraction area RICA in the image IMG is less than predetermined quality, the ReID operation is ended. In the step S46, when the predetermined period does not elapse from the start of the tracking of the relevant authentication target person, the ReID operation is ended. In this instance, the ReID operation may be performed in a next frame.

In the fourth example embodiment, since the verification of the ReID feature quantity is performed on the newly tracked authentication target person, it is possible to reduce a processing load, as compared with a case where the verification of the ReID feature quantity is performed for each frame. On the other hand, the verification of the ReID feature quantity may be performed for each frame so as to improve the accuracy of tracking.

### [4-6: Authentication Operation Performed by Authentication Apparatus 4]

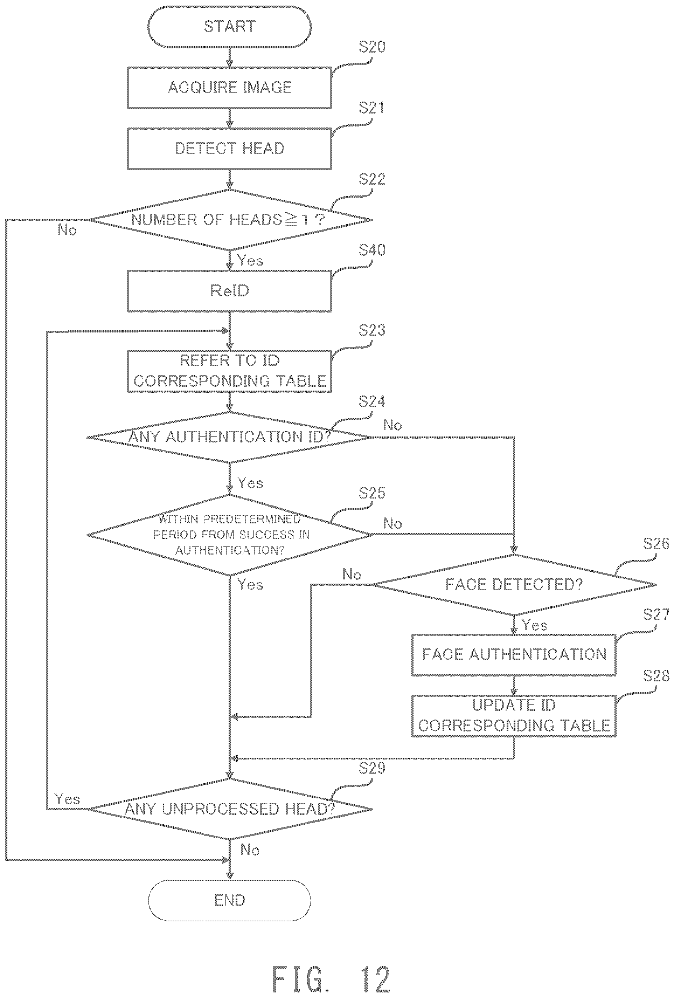

With reference to FIG. 12, a flow of the authentication operation performed by the authentication apparatus 4 in the fourth example embodiment will be described. FIG. 12 is a flowchart illustrating the flow of the authentication operation performed by the authentication apparatus 4 in the fourth example embodiment. The operation from "start" to "end" illustrated in FIG. 12 may be an operation for each frame.

As illustrated in FIG. 12, the authentication operation performed by the authentication apparatus 4 is different from the authentication operation performed by the authentication apparatus 2 illustrated in FIG. 5 in that the ReID operation (step S40) is performed at the beginning of the processing for each tracked authentication target person. The ReID operation (step S40) is as described in FIG. 11.

As illustrated in the example in Table 2, when the authentication target person with a tracking ID of "6" is associated with the authentication target person with a tracking ID of "1", the association unit 417 may set a previous successful authentication time for the tracking ID "6", as "00:02:30". That is, in the determination in the step S25, the determination unit 214 may use a time of the authentication target person with the tracking ID associated.

Furthermore, for example, at the timing when the authentication target person exits from the authentication area RA, the association unit 417 may integrate a plurality of tracking IDs by using the ReID feature quantity, and the determination part 214 may make a final determination as to whether or not the face authentication is successful.

Even in the fourth example embodiment, as in the third example embodiment, the authentication result display operation (step S30) may be performed after the operation of updating the ID corresponding table IDT (step S28).

### [4-7: Technical Effect of Authentication Apparatus 4]

Even if the tracking of the authentication target person is failed, the association of the same person is performed to determine whether or not the face authentication is successful or failed, and it is thus possible to ensure the opportunity of the face authentication of the authentication target person.

### [5: Fifth Example Embodiment]

An authentication apparatus, an authentication method, and a recording medium according to a fifth example embodiment will be described. The following describes the authentication apparatus, the authentication method, and the recording medium according to the fifth example embodiment, by using an authentication apparatus 5 to which the authentication apparatus, the authentication method, and the recording medium according to the fifth example embodiment are applied.

### [5-1: Configuration of Authentication Apparatus 5]

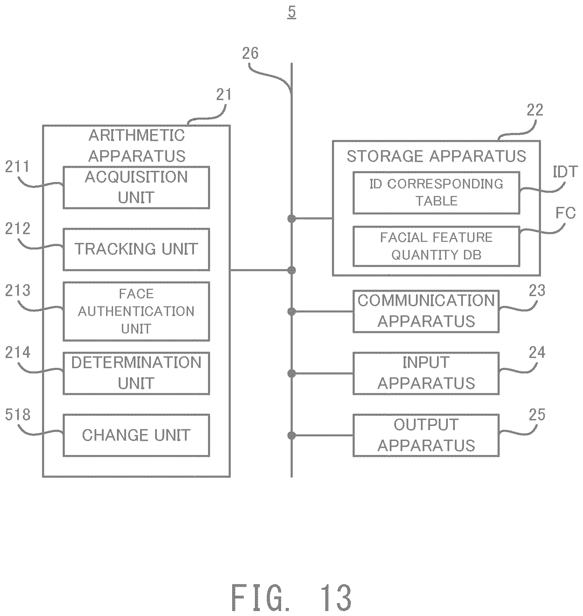

With reference to FIG. 13, a configuration of the authentication apparatus 5 in the fifth example embodiment will be described. FIG. 13 is a block diagram illustrating the configuration of the authentication apparatus 5 in the fifth example embodiment.

As illustrated in FIG. 13, the authentication apparatus 5 in the fifth example embodiment is different from the authentication apparatus 2 in the second example embodiment to the authentication apparatus 4 in the fourth example embodiment, in that the arithmetic apparatus 21 includes a change unit 518. Other features of the authentication apparatus 5 may be the same as those of the authentication apparatus 2 to the authentication apparatus 4.

The change unit 518 changes at least one of a size of the predetermined area and a length of time in which the tracking unit 212 tracks the authentication target person, in accordance with the number of the authentication target persons in the predetermined area. For example, when there are many authentication target persons in the predetermined area, chances are people are hidden by others, and the face detection may be hard. Therefore, by changing at least one of the size of the predetermined area and the length of time in which the tracking unit 212 tracks authentication target person, an opportunity in which the face can be detected, may be increased.

### [5-2: Application Example of Authentication Apparatus 5]

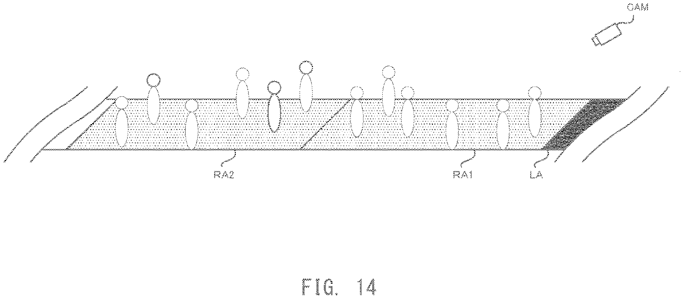

With reference to FIG. 14, an application example of the authentication apparatus 5 in the fifth example embodiment will be described. FIG. 14 is a conceptual diagram illustrating an example of a scene in which the authentication apparatus 5 in the fifth example embodiment is applied. The authentication apparatus 5 in the fifth example embodiment may also be applied to the authentication operation of authenticating the authentication target person so as to determine whether or not the authentication target person is permitted to enter the limit area LA provided in a theme park, an airport, a railroad station, an office, an event venue, or the like.

The change unit 518 changes at least one of the size of the predetermined area and the length of time in which the tracking unit 212 tracks the authentication target person, in accordance with the number of the authentication target persons in the predetermined area. For example, normally, the authentication apparatus 6 authenticates a person in an authentication area RA1 as the authentication target person, but when there are many authentication target persons in the authentication area RA1, the authentication apparatus 6 may authenticate persons in the authentication area RA1 and an authenticate area RA2, as the authentication target persons.

Each of the authentication area RA1 and the authentication area RA2 may be, for example, an area of 5 meters by 5 meters. That is, for example, normally, a length in a moving direction of the authentication target person is 5 meters, but when there are many authentication target persons in the authentication area RA1, the length in the moving direction of the authentication target person may be 10 meters, which is obtained by adding a length of the authentication area RA2 to a length of the authentication area RA1.

The authentication apparatus 5 acquires the image IMG from the camera CAM. The camera CAM may be disposed around an exit of the authentication area RA1. For example, normally, the camera CAM images an area including the authentication area RA1, but when there are many authentication target persons in the authentication area RA1, the camera CAM may image an area including the authentication area RA1 and the authentication area RA2. The camera CAM may be an imaging apparatus that is the same as or similar to the camera CAM used in the second example embodiment to the fourth example embodiment.

### [5-3: Technical Effect of Authentication Apparatus 5]

For example, when there are many authentication target persons in the predetermined area, chances are people are hidden by others, and the face detection may be hard. By changing at least one of the size of the predetermined area and the length of time in which the tracking unit 212 tracks the authentication target person, however, it is possible to ensure the opportunity of the face authentication of the authentication target person. This increases the number of cases where the authentication target person eventually succeeds in the face authentication.

### [6: Sixth Example Embodiment]

An authentication apparatus, an authentication method, and a recording medium according to a sixth example embodiment will be described. The following describes the authentication apparatus, the authentication method, and the recording medium according to the sixth example embodiment, by using an authentication apparatus 6 to which the authentication apparatus, the authentication method, and the recording medium according to the sixth example embodiment are applied.

The authentication apparatus 6 in the sixth example embodiment is different from the authentication apparatus 2 in the second example embodiment to the authentication apparatus 5 in the fifth example embodiment, in how to deal with the failure in the face authentication. Other features of the authentication apparatus 6 may be the same as those of the authentication apparatus 2 to the authentication apparatus 5.

In the sixth example embodiment, the acquisition unit 211 acquires the image IMG, from each of a plurality of imaging apparatuses that are configured to generate the image IMG by imaging the authentication target person. Furthermore, in the sixth example embodiment, when the face authentication using the image IMG captured by a camera CAM1 serving as a first imaging apparatus of the plurality of imaging apparatuses is not successful, the face authentication unit 213 performs the face authentication by using the image IMG captured by a camera CAM2 of the plurality of image IMG serving as a second imaging apparatus that is different from the camera CAM1 of the plurality of imaging apparatuses.

### [6-1-1: First Application Example of Authentication Apparatus 6]

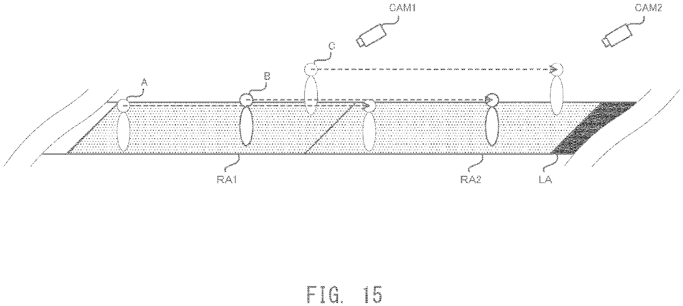

With reference to FIG. 15, a first application example of the authentication apparatus 6 in the sixth example embodiment will be described. FIG. 15 is a conceptual diagram illustrating a first example of a scene in which the authentication apparatus 6 in the sixth example embodiment is applied. The authentication apparatus 6 in the sixth example embodiment may also be applied to the authentication operation of authenticating the authentication target person so as to determine whether or not the authentication target person is permitted to enter the limit area LA provided in a theme park, an airport, a railroad station, an office, an event venue, or the like.

In the scene illustrated in FIG. 15, the authentication apparatus 6 authenticates persons in the authentication area RA1 and the authentication area RA2 as the authentication target persons. Each of the authentication area RA1 and the authentication Area RA2 may be, for example, an area of 5 meters by 5 meters. That is, in the scene illustrated in FIG. 15, the length in the moving direction of the authentication target person may be 10 meters. In the first application example of the authentication apparatus 6 in the sixth example embodiment, the length in the moving direction of the authentication target person may be longer than that illustrated in FIG. 3.

In the scene illustrated in FIG. 15, it is assumed that the authentication target person moves from the authentication area RA1 to the authentication area RA2. In the scene illustrated in FIG. 15, each of the authentication target person A, the authentication target person B, and the authentication target person C moves toward the limited area LA while moving from the authentication area RA1 to the authentication area RA2.

In the scene illustrated in FIG. 15, the authentication apparatus 6 acquires the image IMG from each of the camera CAM1 and the camera CAM2. The camera CAM1 may be disposed around the exit of the authentication area RA1. The camera CAM1 may image an area including the authentication area RA1. In addition, the camera CAM2 may be disposed around an exit of the authentication area RA2. The camera CAM2 may image an area including the authentication area RA2. Each of the camera CAM1 and the camera CAM2 may be an imaging apparatus that is the same as or similar to the camera CAM used in the second example embodiment to the fifth example embodiment.

That is, each of the authentication target person A, the authentication target person B, and the authentication target person C may be imaged by the camera CAM1 in the authentication area RA1, and may be imaged by the camera CAM2 in the authentication area RA2. For each of the authentication target person A, the authentication target person B, and the authentication target person C, when the face authentication using the image IMG captured by the camera CAM1 is not successful, the face authentication unit 213 may perform the face authentication by using the image IMG captured by the camera CAM2. Even when the face authentication using the image IMG captured by the camera CAM2 is not successful, the determination unit 214 may determine that the face authentication is successful when the face authentication using the image IMG captured by the camera CAM1 is successful.

### [6-1-2: ID Corresponding Table IDT in First Application Example]

For example, the ID corresponding table IDT in the first application example of the sixth example embodiment may be illustrated in [Table 3] below.

**[Table3: ID Corresponding Table IDT]**

| Tracking ID | Corresponding tracking ID | Authentication ID | Previous verification time | Tracking start time |
|---|---|---|---|---|
| C1 | N/A | C | 0:02:50 | 0:02:00 |
| B1 | N/A | N/A | 0:03:40 | 0:03:20 |
| 1 | N/A | N/A | 0:04:00 | 0:03:30 |
| C2 | C1 | (C) | (0:02:50) | 0:03:40 |
| B2 | B1 | B | 0:04:10 | 0:03:50 |
| A2 | A1 | N/A | 0:04:20 | 0:04:10 |

A tracking ID "C1" is a tracking ID of the authentication target person C imaged by the camera CAM1. The authentication target person C has succeeded in the face authentication using the image IMG captured by the camera CAM1. In addition, a tracking ID "C2" is a tracking ID of the authentication target person C imaged by the camera CAM2. The tracking ID "C2" may be associated with the tracking ID "C1" by the above-described ReID operation. That is, the ReID operations may be performed between the different cameras CAM1 and CAM2. The determination unit 214 may determine that the face authentication of the authentication target person C is successful even when the face authentication using the image IMG captured by the camera CAM2 is not successful, because the face authentication using the image IMG captured by the camera CAM1 is successful.

A tracking ID "B1" is a tracking ID of the authentication target person B imaged by the camera CAM1. The authentication target person B has not succeeded in the face authentication using the image IMG captured by the camera CAM1. In addition, a tracking ID "B2" is a tracking ID of the authentication target person B imaged by the camera CAM2. The authentication target person B has succeeded in the face authentication using the image IMG captured by the camera CAM2. The tracking ID "B2" may be associated with the tracking ID "B1" by the above-described ReID operation. When the face authentication using the image IMG captured by the camera CAM1 is not successful, the face authentication unit 213 may perform the face authentication by using the image IMG captured by the camera CAM2. Even when the face authentication using the image IMG captured by the camera CAM1 is not successful, the determination unit 214 may determine that the face authentication is successful when the face authentication using the image IMG captured by the camera CAM2 is successful. In the case illustrated in Table 3, since the face authentication using the image IMG captured by the camera CAM2 is successful, the determination unit 214 may determine that the face authentication of the authentication target person B is successful.

A tracking ID "A1" is a tracking ID of the authentication target person A imaged by the camera CAM1. The authentication target person A has not succeeded in the face authentication using the image IMG captured by the camera CAM1. In addition, a tracking ID "A2" is a tracking ID of the authentication target person A imaged by the camera CAM2. The tracking ID "A2" may be associated with the tracking ID "A1" by the above-described ReID operation. When the face authentication using the image IMG captured by the camera CAM1 is not successful, the face authentication unit 213 may perform the face authentication by using the image IMG captured by the camera CAM2. Even when the face authentication using the image IMG captured by the camera CAM1 is not successful, the determination unit 214 may determine that the face authentication is successful when the face authentication using the image IMG captured by the camera CAM2 is successful. In the case illustrated in Table 3, even though the face authentication using the image IMG captured by the camera CAM2 is not yet successful, if the face authentication using the image IMG captured by the camera CAM2 is successful before the authentication target person A exists from the authentication area RA2, then, the determination unit 214 may determine that the face authentication of the authentication target person A is successful.

That is, when a camera CAM is also provided in an area (e.g., the authentication area RA2) before (e.g., 5 m to 10 m before) the normal authentication area RA (e.g., the authentication area RA1) and the face authentication is successful there, the determination unit 214 may determine that the face authentication is successful even when the face authentication is not successful in the normal authentication area RA. Alternatively, when the face authentication is not successful in the normal authentication area RA (e.g., the authentication area RA2), the image IMG may be acquired from a camera CAM (e.g., the camera CAM1) provided to image a rear area (e.g., the authentication area RA1) of the normal authentication area, and the face authentication may be continued while the authentication target person is tracked. That is, in the sixth example embodiment, it is possible to increase a success rate of the face authentication by expanding the area in both the time and space. In this way, it is possible to expand the authentication area than normal by increasing the number of cameras CAM.

In the fourth example embodiment, the association of the tracking at different times by the same camera CAM is performed, but in the sixth example embodiment, the association of the tracking at different times by the different cameras CAM is performed. The images IMG captured by the plurality of cameras CAM may share the tracked authentication target person.

### [6-2-1: Second Application Example of Authentication Apparatus 6]

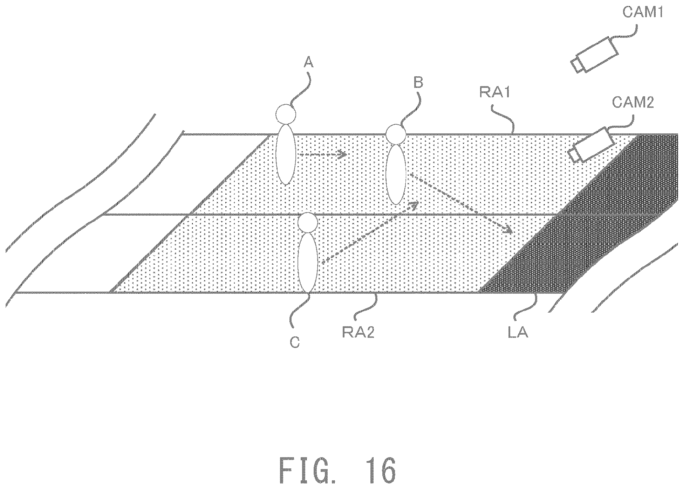

With reference to FIG. 16, a second application example of the authentication apparatus 6 in the sixth example embodiment will be described. FIG. 16 is a conceptual diagram illustrating a second example of the scene in which the authentication apparatus 6 in the sixth example embodiment is applied.

In the scene illustrated in FIG. 16, the authentication apparatus 6 authenticates persons in the authentication area RA1 and the authentication area RA2, as the authentication target persons. Each of the authentication area RA1 and the authentication area RA2 may be, for example, an area of 5 meters by 5 meters. That is, in the scene illustrated in FIG. 16, the authentication area RA may be 10 meters wide. In the second application example of the authentication apparatus 6 in the sixth example embodiment, the width of the authentication area RA may be increased as compared with that illustrated in FIG. 3.

In the scene illustrated in FIG. 16, the authentication apparatus 6 acquires the image IMG from each of the camera CAM1 and the camera CAM2. The camera CAM1 may be disposed around the exit of the authentication area RA1. The camera CAM1 may image an area including the authentication area RA1. In addition, the camera CAM2 may be disposed around the exit of the authentication area RA2. The camera CAM2 may image an area including the authentication area RA2.

In the scene illustrated in FIG. 16, the authentication target person may move not only in one of the authentication area RA1 and the authentication area RA2, but also may move from the authentication area RA1 to the authentication area RA2, and from the authentication area RA2 to the authentication area RA1. In the scene illustrated in FIG. 16, the authentication target person A is moving toward the limited area LA in the authentication area. The authentication target person B is moving toward the limited area LA while moving from authentication area RA1 to the authentication area RA2. The authentication target person C is moving toward the limited area LA while moving from the authentication area RA2 to the authentication area RA1.

That is, the authentication target person B may be imaged by the camera CAM1 in the authentication area RA1, and may be imaged by the camera CAM2 in the authentication area RA2. For the authentication target person B, when the face authentication using the image IMG captured by the camera CAM1 is not successful, the face authentication unit 213 may perform the face authentication by using the image IMG captured by the camera CAM2. Even when the face authentication using the image IMG captured by the camera CAM2 is not successful, the determination unit 214 may also determine that the face authentication is successful when the face authentication using the image IMG captured by the camera CAM1 is successful.

In addition, the authentication target person C may be imaged by the camera CAM2 in the authentication area RA2, and may be imaged by the camera CAM1 in the authentication area RA1. For the authentication target person C, when the face authentication using the image IMG captured by the camera CAM2 is not successful, the face authentication unit 213 may perform the face authentication by using the image IMG captured by the camera CAM1. Even when the face authentication using the image IMG captured by the camera CAM1 is not successful, the determination unit 214 may also determine that the face authentication is successful when the face authentication using the image IMG captured by the camera CAM2 is successful.

### [6-2-2: ID Corresponding Table IDT in Second Application Example]

For example, the ID corresponding table IDT in the second application example of the sixth example embodiment may be illustrated in [Table 4] below.

**[Table4: ID Corresponding Table IDT]**

| Tracking ID | Corresponding tracking ID | Authentication ID | Previous verification time | Tacking start time |
|---|---|---|---|---|
| B1 | N/A | B | 0:02:50 | 0:02:00 |
| C2 | N/A | N/A | 0:03:40 | 0:03:20 |
| A1 | N/A | N/A | 0:04:00 | 0:03:30 |
| B2 | B1 | (B) | (0:02:50) | 0:03:40 |
| C1 | C2 | C | 0:04:10 | 0:03:50 |

The tracking ID "B1" is a tracking ID of the authentication target person B imaged by the camera CAM1 . The authentication target person B has succeeded in the face authentication using the image IMG captured by the camera CAM1. In addition, the tracking ID "B2" is a tracking ID of the authentication target person B imaged by the camera CAM2. The tracking ID "B2" may be associated with the tracking ID "B1" by the above-described ReID operation. The determination unit 214 may determine that the face authentication of the authentication target person B is successful even when the face authentication using the image IMG captured by the camera CAM2 is not successful, because the face authentication using the image IMG captured by the camera CAM1 is successful.

The tracking ID "C2" is a tracking ID of the authentication target person C imaged by the camera CAM2. The authentication target person C has not succeeded in the face authentication using the image IMG captured by the camera CAM2. In addition, the tracking ID "C1" is a tracking ID of the authentication target person C imaged by the camera CAM1. The tracking ID "C1" may be associated with the tracking ID "C2" by the above-described ReID operation. When the face authentication using the image IMG captured by the camera CAM2 is not successful, the face authentication unit 213 may perform the face authentication by using the image IMG captured by the camera CAM1. Even when the face authentication using the image IMG captured by the camera CAM2 is not successful, the determination unit 214 may determine that the face authentication is successful when the face authentication using the image IMG captured by the camera CAM1 is successful. In the case illustrated in Table 4, since the face authentication using the image IMG captured by the camera CAM1 is successful, the determination unit 214 may determine that the face authentication of the authentication target person C is successful.

The tracking ID "A1" is a tracking ID of the authentication target person A imaged by the camera CAM1. When the authentication target person A has moved from the authentication area RA1 to the authentication area RA2, a new tracking ID may be assigned to the authentication target person A, and the new tracking ID may be associated with the tracking ID "A1" by the ReID operation.

### [6-2: Technical Effect of Authentication Apparatus 6]

In the sixth example embodiment, by performing the ReID operation in addition to the tracking operation, it is possible to further continue to track the same authentication target person. The authentication apparatus 6 is capable of performing the tracking operation using the images IMG acquired by different cameras CAM, by the ReID operations. Thus, it is not necessary to give a warning many times, for example. The warning may be, for example, a warning against not wearing a mask, a warning against a person with a high body temperature, or the like.

### [7: Seventh Example Embodiment]

An authentication apparatus, an authentication method, and a recording medium according to a seventh example embodiment will be described. The following describes the authentication apparatus, the authentication method, and the recording medium according to the seventh example embodiment, by using an authentication apparatus 7 to which the authentication apparatus, the authentication method, and the recording medium according to the seventh example embodiment are applied.

The authentication apparatus 7 in the seventh example embodiment is different from the authentication apparatus 2 in the second example embodiment to the authentication apparatus 6 in the sixth example embodiment, in an area of the image IMG used for the face authentication. Other features of the authentication apparatus 7 may be the same as those of the authentication apparatus 2 to the authentication apparatus 6.

When the authentication target person in the image IMG is no longer included in the image IMG, the head of the authentication target person is gradually less included in the image IMG from a state where the entire head is included, and eventually, the entire head is not included in the image IMG. For example, when only a part of the head of the authentication target person is included in the image IMG, the tracking by the tracking unit 212 may be failed. For example, in some cases, the tracking unit 212 does not determine that a part of the head of the authentication target person is not the head of the same authentication target person, but is a new head, and associates a new tracking ID with a part of the head of the authentication target person. In this case, even when the association unit 417 performs the ReID operation, a part of the head may not be associated with the tracking ID of the authentication target person. This may result in the tracking ID that is not associated with any tracking ID.

Therefore, in the seventh example embodiment, the tracking unit 212 tracks the authentication target person on the basis of the head of the authentication target person in the predetermined area of the image IMG. The tracking unit 212 may track the authentication target person when the head of the authentication target person is included in the predetermined area of the image IMG.

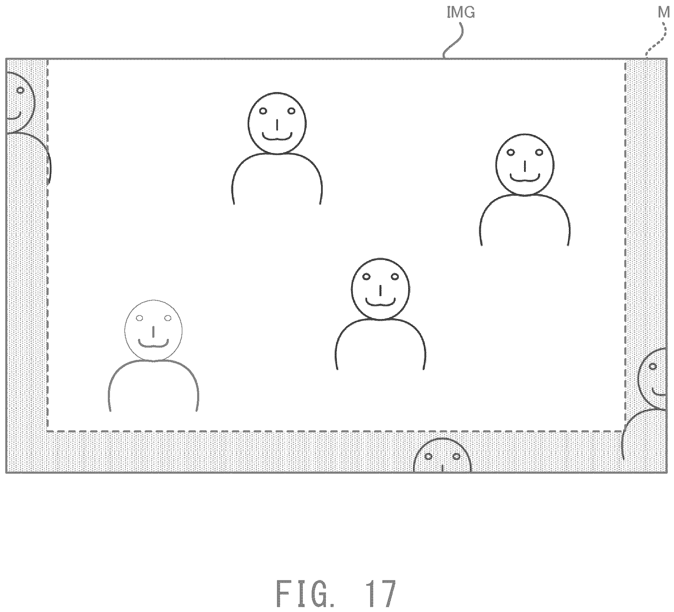

FIG. 17 is a conceptual diagram illustrating an example of the tracking operation of the authentication apparatus in the seventh example embodiment. For example, as illustrated in FIG. 17, among the heads included in the image IMG, heads included in an area hidden by a mask M may be excluded from tracking targets. Alternatively, when determining that the heads included in the area hidden by the mask M are new head, the tracking unit 212 does not need to associate a new tracking ID. Alternatively, even when the tracking unit 212 successfully tracks the head included in the area hidden by the mask M, the authentication apparatus 7 may omit the step S23 to the step S28.

The tracking unit 212 tracks the authentication target person on the basis of the head of the authentication target person in the predetermined area of the image IMG, and it is thus possible to prevent a failure in the tracking of the authentication target person.

In the above-described example embodiments, the face authentication is exemplified, but the authentication operation with the tracking may be performed by another authentication, such as iris authentication. The authentication operation with the tracking may be also performed by multi-modal authentication using both the face authentication and the iris authentication.

In each of the above-described example embodiments, the authentication target person without a mask may be detected from the image IMG, and announcement may be made to the relevant authentication target person to have him/her wear a mask, or the manager/administrator may talk to him/her to wear a mask. In particular, when the ReID operation is performed to continue to track a particular authentication target person, it is not necessary to issue a warning many times. In addition, the face authentication and surface temperature measurement may be performed simultaneously in a non-contact manner, so that the authentication target person whose surface temperature exceeds a set value may be confirmed, and the manager/administrator may talk to him/her to encourage him/her to measure a body temperature.

### [8: Supplementary Notes]

With respect to the example embodiments described above, the following Supplementary Notes are further disclosed.

### [Supplementary Note 1]

An authentication apparatus including:
an acquisition unit that acquires an image including a predetermined area through which an authentication target person passes;
a tracking unit that tracks the authentication target person on the basis of a tracking area of the authentication target person including a head of the authentication target person in the image; and
a face authentication unit that performs face authentication on the authentication target person, when a face of the authentication target person is included in the image while the tracking unit tracks the authentication target person.

### [Supplementary Note 2]

The authentication apparatus according to Supplementary Note 1, further including a determination unit that determines that a face authentication of the authentication target person is failed, when the face authentication of the authentication target person is not successful even once before the authentication target person tracked by the tracking unit goes out of the predetermined area.

### [Supplementary Note 3]

The authentication apparatus according to Supplementary Note 2, further including a display unit that displays the image,
by superimposing information indicating a success in the face authentication of the authentication target person, on the face of the authentication target person included in the image, when the face authentication of the authentication target person is successful,
by superimposing information indicating that the authentication target person is subjected to the face authentication, on the face of the authentication target person included in the image, when the face authentication of the authentication target person is not successful even once until the authentication target person tracked goes out of the predetermined position, and
by superimposing information indicating a failure in the face authentication of the authentication target person, on the face of the authentication target person included in the image, when the determination unit determines that the face authentication of the authentication target person is failed.

### [Supplementary Note 4]

The authentication apparatus according to Supplementary Note 3, wherein the display unit performs display differently when the face authentication is not successful because the face of the authentication target person included in the image is unsuitable for the face authentication, and when the face authentication is not successful even though the face of the authentication target person included in the image is suitable for the face authentication.

### [Supplementary Note 5]

The authentication apparatus according to any one of Supplementary Notes 1 to 4, further including:
a storage unit that stores information about a tracked authentication target person who is the authentication target person who has been tracked by the tracking unit; and
an association unit that associates a non-tracked authentication target person with the tracked authentication target person, when the tracking area of the authentication target person including a head of the non-tracked authentication target person, who is the authentication target person newly tracked by the tracking unit, is included in the image, and when information about the tracked authentication target person who is the same person as the non-tracked authentication target person is stored in the storage unit.

### [Supplementary Note 6]

The authentication apparatus according to any one of Supplementary Notes 1 to 5, further including
a change unit that changes at least one of a size of the predetermined area and a length of time in which the tracking unit tracks the authentication target person, in accordance with a number of the authentication target persons in the predetermined area.

### [Supplementary Note 7]

The authentication apparatus according to any one of Supplementary Notes 1 to 6, wherein
the acquisition unit acquires the image from each of a plurality of imaging apparatuses that are configured to generate the image by imaging the authentication target person, and
when the face authentication using the image captured by a first imaging apparatus of the plurality of imaging apparatuses is not successful, the face authentication unit performs the face authentication by using the image captured by a second imaging apparatus that is different from the first imaging apparatus of the plurality of imaging apparatuses.

### [Supplementary Note 8]

The authentication apparatus according to any one of Supplementary Notes 1 to 7, wherein the tracking unit tracks the authentication target person on the basis of the tracking area of the authentication target person including the head of the authentication target person in the predetermined area of the image.

### [Supplementary Note 9]

An authentication method including:
acquiring an image including a predetermined area through which an authentication target person passes;
tracking the authentication target person on the basis of a tracking area of the authentication target person including a head of the authentication target person in the image; and
performing face authentication on the authentication target person, when a face of the authentication target person is included in the image while tracking the authentication target person.

### [Supplementary Note 10]

A recording medium on which a computer program that allows a computer to execute an authentication method is recorded, the authentication method including:
acquiring an image including a predetermined area through which an authentication target person passes;
tracking the authentication target person on the basis of a tracking area of the authentication target person including a head of the authentication target person in the image; and
performing face authentication on the authentication target person, when a face of the authentication target person is included in the image while tracking the authentication target person.

At least a part of the constituent components of each of the example embodiments described above can be combined with at least another part of the constituent components of each of the example embodiments described above, as appropriate. A part of the constituent components of each of the example embodiments described above may not be used. Furthermore, to the extent permitted by law, all the references (e.g., publications) cited in this disclosure are incorporated by reference as a part of the description of this disclosure.

This disclosure is not limited to the examples described above and is allowed to be changed, if desired, without departing from the essence or spirit of this disclosure which can be read from the claims and the entire identification. An authentication apparatus, an authentication method, and a recording medium with such changes are also intended to be within the technical scope of this disclosure.

### Description of Reference Codes

1, 2, 3, 4, 5, 6, 7 Authentication apparatus
11, 211 Acquisition unit
12, 212 Tracking unit
13, 213 Face authentication unit
214 Determination unit
315 Display control unit
416 Storage control unit
417 Association unit
518 Change unit
IDT ID corresponding table
FC Facial feature quantity database
RA Authentication area
LA Limited area
RIC ReID feature quantity database
RICA ReID Feature quantity extraction area

## Claims

1. An authentication apparatus comprising:
an acquisition unit that acquires an image including a predetermined area through which an authentication target person passes;
a tracking unit that tracks the authentication target person on the basis of a tracking area of the authentication target person including a head of the authentication target person in the image; and
a face authentication unit that performs face authentication on the authentication target person, when a face of the authentication target person is included in the image while the tracking unit tracks the authentication target person.

2. The authentication apparatus according to claim 1, further comprising a determination unit that determines that a face authentication of the authentication target person is failed, when the face authentication of the authentication target person is not successful even once before the authentication target person tracked by the tracking unit goes out of the predetermined area.

3. The authentication apparatus according to claim 2, further comprising a display unit that displays the image,
by superimposing information indicating a success in the face authentication of the authentication target person, on the face of the authentication target person included in the image, when the face authentication of the authentication target person is successful,
by superimposing information indicating that the authentication target person is subjected to the face authentication, on the face of the authentication target person included in the image, when the face authentication of the authentication target person is not successful even once until the authentication target person tracked goes out of the predetermined position, and
by superimposing information indicating a failure in the face authentication of the authentication target person, on the face of the authentication target person included in the image, when the determination unit determines that the face authentication of the authentication target person is failed.

4. The authentication apparatus according to claim 3, wherein the display unit performs display differently when the face authentication is not successful because the face of the authentication target person included in the image is unsuitable for the face authentication, and when the face authentication is not successful even though the face of the authentication target person included in the image is suitable for the face authentication.

5. The authentication apparatus according to any one of claims 1 to 4, further comprising:
a storage unit that stores information about a tracked authentication target person who is the authentication target person who has been tracked by the tracking unit; and
an association unit that associates a non-tracked authentication target person with the tracked authentication target person, when the tracking area of the authentication target person including a head of the non-tracked authentication target person, who is the authentication target person newly tracked by the tracking unit, is included in the image, and when information about the tracked authentication target person who is the same person as the non-tracked authentication target person is stored in the storage unit.

6. The authentication apparatus according to any one of claims 1 to 5, further comprising
a change unit that changes at least one of a size of the predetermined area and a length of time in which the tracking unit tracks the authentication target person, in accordance with a number of the authentication target persons in the predetermined area.

7. The authentication apparatus according to any one of claims 1 to 6, wherein
the acquisition unit acquires the image from each of a plurality of imaging apparatuses that are configured to generate the image by imaging the authentication target person, and
when the face authentication using the image captured by a first imaging apparatus of the plurality of imaging apparatuses is not successful, the face authentication unit performs the face authentication by using the image captured by a second imaging apparatus that is different from the first imaging apparatus of the plurality of imaging apparatuses.

8. The authentication apparatus according to any one of claims 1 to 7, wherein the tracking unit tracks the authentication target person on the basis of the tracking area of the authentication target person including the head of the authentication target person in the predetermined area of the image.

9. An authentication method comprising:
acquiring an image including a predetermined area through which an authentication target person passes;
tracking the authentication target person on the basis of a tracking area of the authentication target person including a head of the authentication target person in the image; and
performing face authentication on the authentication target person, when a face of the authentication target person is included in the image while tracking the authentication target person.

10. A recording medium on which a computer program that allows a computer to execute an authentication method is recorded, the authentication method including:
acquiring an image including a predetermined area through which an authentication target person passes;
tracking the authentication target person on the basis of a tracking area of the authentication target person including a head of the authentication target person in the image; and
performing face authentication on the authentication target person, when a face of the authentication target person is included in the image while tracking the authentication target person.
